# EUROPEAN PATENT SPECIFICATION

(11) **EP 3 022 724 B1**
(45) Date of publication and mention of the grant of the patent: **14.06.2017**
(21) Application number: 14747477.9
(22) Date of filing: 16.07.2014
(51) Int. Cl.: G08C 17/02, G08C 17/04, G08C 17/06, G08C 23/04

(54) **ENCLOSURE WITH WIRELESS COMMUNICATION FEATURES**
GEHÄUSE MIT DRAHTLOSKOMMUNIKATIONSFUNKTIONEN
ENCEINTE POURVUE DE CARACTÉRISTIQUES DE COMMUNICATION SANS FIL

(30) Priority: 16.07.2013 US 201361846729 P; 05.09.2013 US 201361874203 P
(43) Date of publication of application: 25.05.2016
(73) Proprietor: Franklin Electric Company Inc., Fort Wayne, IN 46809 (US)
(72) Inventor: SMITH, Robert, Charles, Ossian, IN 46777 (US); FRANK, Jeffrey, David, Fort Wayne, IN 46807 (US)
(74) Representative: Dr. Weitzel & Partner
(86) International application number: PCT/US2014/046820
(87) International publication number: WO 2015/009805

(56) References cited:
- US-A1- 2008 055 108
- US-A1- 2013 154 791

## Description

### CROSS-REFERENCE TO RELATED APPLICATIONS

The present application claims the benefit of priority from commonly owned U.S. Provisional Patent Application No. 61/846,729, filed July 16, 2013, and U.S. Provisional Patent Application No. 61/874,203, filed September 5, 2013.

### FIELD OF THE DISCLOSURE

The disclosure relates generally to enclosures for control systems. More particularly, the disclosure relates to enclosures with wireless communication features.

### BACKGROUND OF THE DISCLOSURE

Enclosures for control systems protect control units inside the enclosures from the elements. The enclosures may be fully or partially sealed to keep out moisture and particulate matter that could damage the control units. As used herein control units refer to any device configured to control a load based on control parameters. Control units generally include application logic and interfaces to receive input data from sensors and to output electrical power to a load, such as a motor. Control units are often used in fluid supply systems, but as used herein control units are not so limited.

A fluid supply system uses a motor to drive a pump and transfer a fluid from a supply reservoir, such as a well, to a demand reservoir, such as a tank. A sensor measures a characteristic of the fluid, and a control unit controls operation of the motor. In some systems, the control unit measures a level of the fluid in a tank and controls operation of the motor to maintain the level within a range. When the level reaches the low end of the range, the control unit turns the motor on and keeps it on until the level reaches the high end of the range. In another system, the speed of the motor is controlled to maintain pressure within predetermined parameters. A variable speed loop controls the speed of the motor within a variable speed range to gradually increase or decrease the pumping rate and thereby maintain the pressure near the setpoint. Induction motors are frequently used in fluid supply systems. Documents US2013/154791 A1 and US2008/055108 A1 disclose prior art control systems.

### SUMMARY OF THE DISCLOSURE

Exemplary embodiments of a control system and method are provided herein. In one embodiment, the system comprises a drive unit including an enclosure including a cover and an enclosure body having an opening, the enclosure forming an enclosed space when the cover is positioned over the opening; a control unit positioned in the enclosed space, the control unit including application logic configured to control a load based on control parameters provided by a user with a user input device; and an internal wireless link configured to receive the control parameters, the internal wireless link positioned inside the enclosed space when the cover is positioned over the opening. The system further comprises a communication module located outside the enclosure and configured to establish a short-range wireless link with the internal wireless link, the communication module including a transceiver configured to establish communication with the user input device and receive the control parameters therefrom, and the communication module configured to communicate the control parameters to the internal wireless link with the short-range wireless link.

In variations of the present embodiment, the communication module is detachably coupled to the enclosure.

In variations of the present embodiment, the drive unit is configured to determine the presence of the communication module.

In variations of the present embodiment, the communication module comprises an external wireless link and a processing device, the external wireless link establishing the short-range wireless link with the internal wireless link. In one example, the short-range wireless link comprises one of an inductive and a capacitive wireless communication link. In another example, the control system further comprises a power circuit configured to generate power pulses and transfer energy to the external wireless link via the power pulses.

In one embodiment, the method comprises entering configuration parameters into a user input device, the configuration parameters configured to control a control unit adapted to power a load, the control unit located inside an enclosure; transmitting the configuration parameters with the user input device; receiving the configuration parameters with a communication module including an external wireless link and a processing device; transmitting the configuration parameters with the external wireless link to an internal wireless link located inside the enclosure; and configuring the control unit based on the configuration parameters.

In variations of the present embodiment, the method further comprises: detachably attaching the communication module to the enclosure.

In variations of the present embodiment, the method further comprises: detecting the presence of the communication unit, and preventing configuration of the control unit if the presence is not detected.

The foregoing embodiments and many of the attendant advantages of this invention will become more readily appreciated as the same become better understood by reference to the following detailed description when taken in conjunction with the accompanying drawings.

### DESCRIPTION OF THE DRAWINGS

FIG. 1 is a block diagram of an embodiment of a control system including a drive unit wirelessly communicatively coupled with a user input interface as set forth in the disclosure;
FIG. 2 is a diagrammatic representation of an embodiment of a liquid supply system set forth in the disclosure;
FIGS. 3-12 are a diagrammatic representations of further embodiments of a control system, and variations thereof, set forth in the disclosure; and
FIGS. 13-17 are schematic and diagrammatic representations of embodiments of inductive short-range wireless links set forth in the disclosure.

Corresponding reference characters indicate corresponding parts throughout the several views. Although the drawings represent embodiments of various features and components according to the present invention, the drawings are not necessarily to scale and certain features may be exaggerated in order to better illustrate and explain the present invention. The exemplification set out herein illustrates embodiments of the invention, and such exemplifications are not to be construed as limiting the scope of the invention in any manner. As used herein, the terms "comprising" and "including" denote an open transition meaning that the claim in which the open transition is used is not limited to the elements following the transitional term.

### DETAILED DESCRIPTION

For the purposes of promoting an understanding of the principles of the invention, reference will now be made to the embodiments illustrated in the drawings, which are described below. The embodiments disclosed below are not intended to be exhaustive or limit the invention to the precise form disclosed in the following detailed description. Rather, the embodiments are chosen and described so that others skilled in the art may utilize their teachings. It will be understood that no limitation of the scope of the disclosure is thereby intended. The invention includes any alterations and further modifications in the illustrated devices and described methods and further applications of the principles of the invention which would normally occur to one skilled in the art to which the invention relates.

Exemplary embodiments of a control system and a method are provided herein. A motor coupled to a pump is an exemplary load. Although embodiments described below may be described in the context of an electric motor driving a pump, the invention is no so limited and embodiments of the invention may be used to control any load coupled to a control unit. Other loads may include traction systems of vehicles, fans, extruders, rollers etc.

The disclosure provides wireless communication features. Benefits include providing isolated communications between a communication module located outside an enclosure and a control unit located in the enclosure to maintain the integrity of the enclosure, not burdening the control system with the cost of this feature when used on an intermittent basis, and the possibility of installation of the control system by a non-professional installer, as the installer will not be exposed to live voltages.

Furthermore, the communication module can be attached in a few seconds to the enclosure, without removal of any covers. The same communication module could work across a wide range of products having the supporting circuitry. The supporting circuitry may be substantially less expensive than a transceiver in the control module.

Even further, future obsolescence of the communication module is easily overcome since the communication module can be updated without modifying the control unit inside the enclosure. The range of a transceiver in the control module would not be impacted by the enclosure. A % watt transceiver would have a range of 1000' feet, for instance, but less if it were placed inside the enclosure. The communication module may also be NEMA 4 rated, for permanent installation, outdoors.

The communication features include means of coupling energy from within the enclosure (powering the communication module), means of communicating signals (transmit, receive, etc.), means to communicate through wireless signals (magnetically, optically etc., through electronic standards including WiFi and Bluetooth) and to switches and displays of the communications module or independent of the communications module.

The communication features also include means for detachably attaching the communication module to the enclosure. Exemplary attaching means include magnets, fasteners including hook-and-loop fasteners, clearance fits and any known means for detachably attaching components.

As discussed above, a fluid supply system, or pump system, is an example of a control system. Pump systems may be used, among other reasons, to fill tanks, maintain water pressure in a pipe, or pump liquids out of deep wells. Sensors and control switches may be coupled to a pump-motor assembly ("PMA") to enable the drive unit to control the pumping rate. For example, an on/off switch may be used to turn the drive unit on and off. A level switch may be used to indicate to the drive unit when pumping is necessary to fill a tank and to indicate to the drive unit that the tank is full. A pressure transducer may be used by the drive unit to maintain fluid pressure in a pipe. Different pump types may be coupled to the motor, including centrifugal, positive displacement, reciprocating and any other pump types. PMA's may be purchased as a system or may be assembled by matching the requirements of the motor, the pump and the system application.

Renewable energy sources can be used to power PMAs subject to variations in the availability of said resources. Exemplary renewable energy sources include water, wind and solar. Different control schemes are needed to satisfy demand with renewable energy sources and compensate for or overcome such variations. For example, a control scheme to use solar energy in pumping applications may incorporate a maximum power point control strategy to maximize the amount of energy captured by photovoltaic panels at different insolation levels over time. When the solar energy is insufficient to pump the required amount of water, batteries or a fueled power generator may be connected to the drive unit to satisfy demand, either by supplementing the solar power captured by the photoelectric panels or as an alternate supply source. As used herein, a fueled power generator comprises a machine that converts fuel to electrical energy. Exemplary fuels include natural gas, propane, methane, kerosene, diesel and gasoline.

As exemplified above, drive units find utility in many applications and can be located in different environments, both indoors and outdoors. One of the challenges in building drive units to satisfy such complex requirements is to provide drive units that are adaptable to changing requirements and technologies. The wireless communication features facilitate communication with the drive unit to enable a user or technician to modify control parameters of the drive unit, update its control logic, and troubleshoot performance. Thus, for example, as new sensors or motors become available, control logic is improved, or the application's requirements change, the drive unit can be updated with a wirelessly communicatively coupled user input device to adapt to these and other changes. The wireless communication features have several advantages, including the capability to reduce the cost of the drive unit by excluding from it a complex user input interface, to improve protection of drive components by removing external components that may be susceptible to environmental degradation, and of course, a more flexible way to obtain the updates and bring them to the drive unit or to download from the drive unit performance parameters that can then be analyzed in a comfortable environment rather than at the drive unit's location.

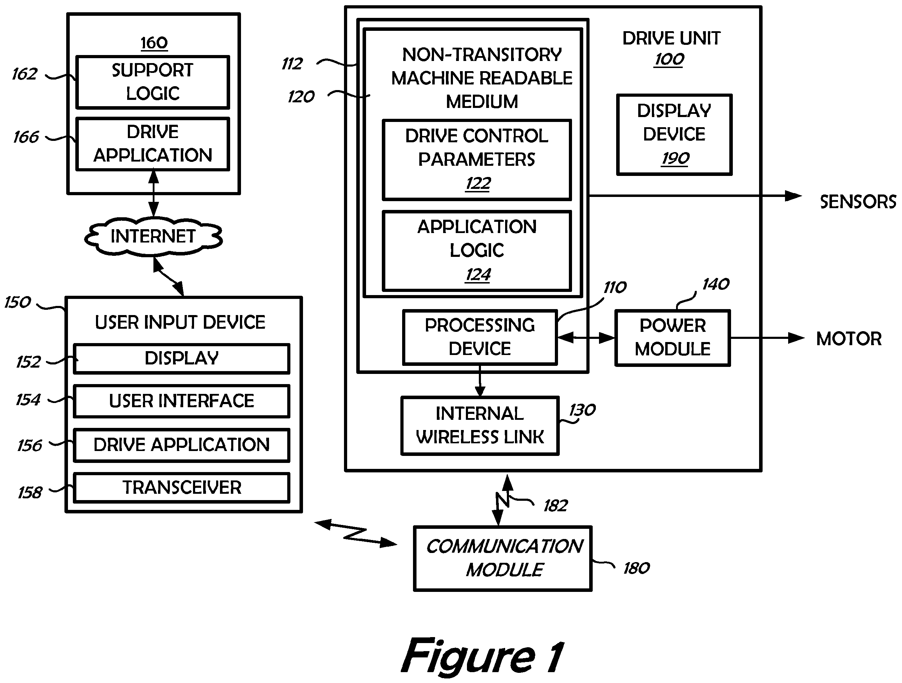

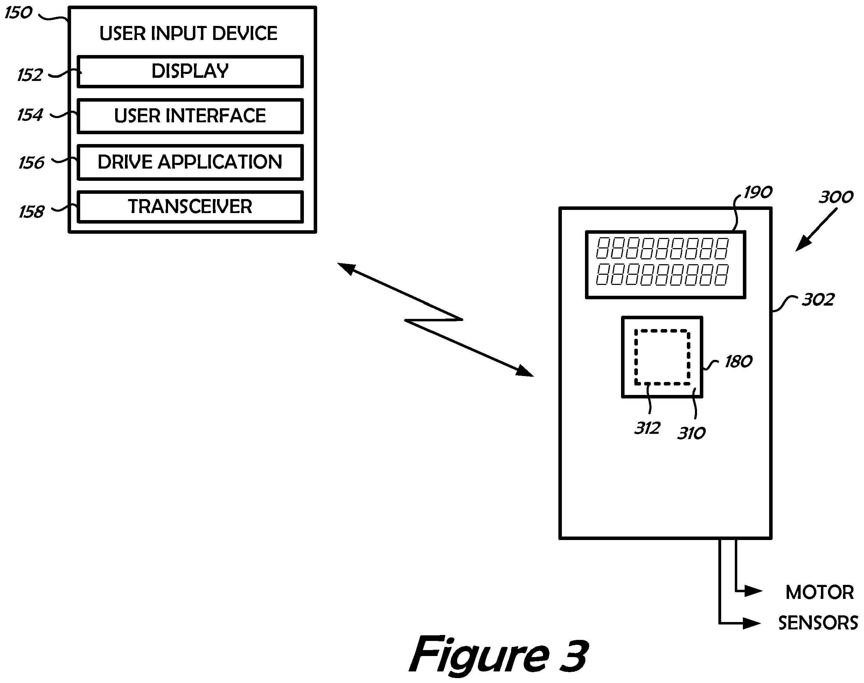

Referring now to FIG. 1, an exemplary embodiment of a drive unit, denoted by numeral 100, comprises a control unit 112 including with a non-transitory machine readable medium 120 and a processing device 110, an internal wireless link 130, and a power module 140 to power a motor (not shown). Power module 140 comprises a plurality of power switches operable to generate a driving voltage for the motor. A communication module 180 is communicatively coupled via a short-range wireless link with internal wireless link 130. Control unit 112, internal wireless link 130, and power module 140, are located in an enclosure. Communication module 180 is located outside the enclosure and may be detachably attached to it. Internal wireless link 130 and communication module 180 are further described below with reference to FIGS. 3 to 6.

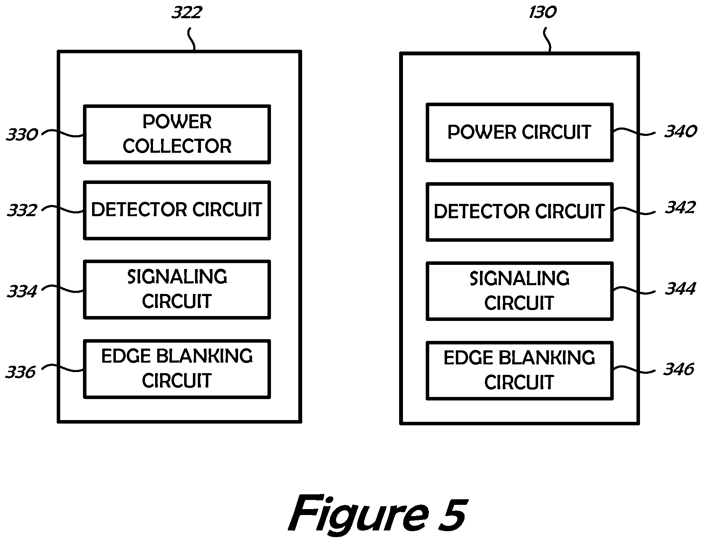

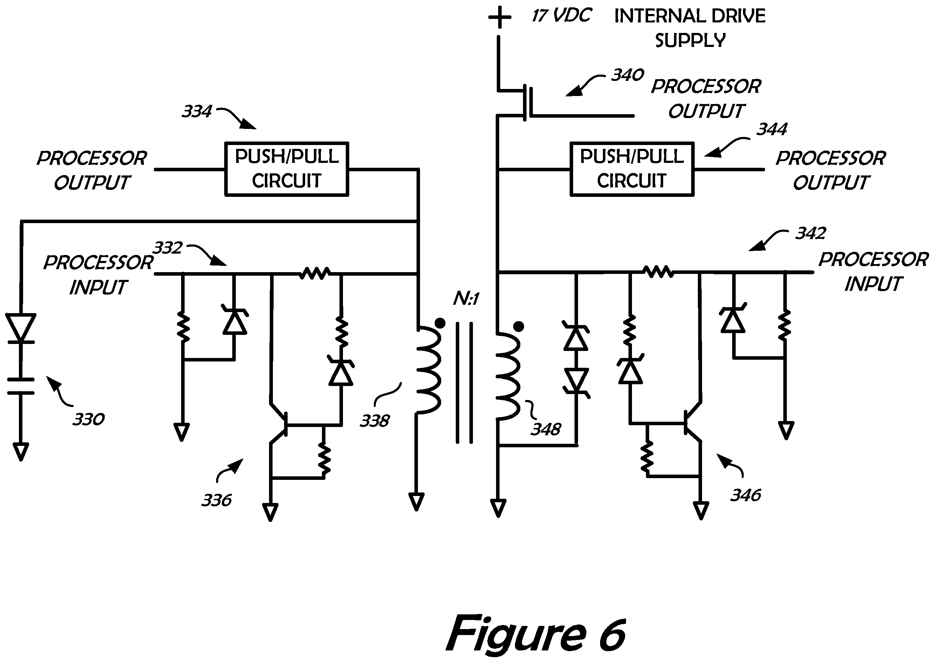

Non-transitory machine readable medium 120 includes drive control parameters 122, and application logic 124. Power module 140 receives control signals from processing device 110 as instructed by application logic 124 to provide a suitable power signal to the motor. Power modules comprise power switches which are switched by motor control logic to generate appropriate power waveforms. Operation of power modules is well known in the art. Application logic 124 also includes logic configured to interface and/or control components of internal wireless link 130 such as a power circuit, a signaling circuit, a signaling circuit and an edge blanking circuit described with reference to FIGS. 5 and 6. Although non-transitory machine readable medium 120 and application logic 124 are shown in control unit 112, another non-transitory machine readable medium 120 and a portion of application logic 124 may be included in internal wireless link 130. Thus, internal wireless link 130 may include the components and logic necessary to perform signaling, detection, and power transferring functions, or may cooperate with control unit 112 to perform those functions.

Also shown in FIG. 1 is a user input device 150 and a web server 160 communicatively coupled to each other and to drive unit 100. Web server 160 may include support logic 162 and a drive application 166. User input device 150 may comprise mobile devices, computers, and dedicated user input devices. Exemplary mobile devices include tablets and smart phones. User input device 150 includes a display 152, a user interface 154, optionally a drive application 156, and a transceiver 158. Exemplary user interfaces include a keyboard, a mouse, a touch screen incorporated with display 152, and any other known user interfaces. Transceiver 158 may comprise more than one protocol for communicating wirelessly with web server 160 and with transceiver 130. As used herein, a transceiver is a device incorporating logic, a transmit portion, and a receive portion, the logic causing transmission and reception of wireless signals respectively by the transmit and the receive portions.

In one variation of the present embodiment, a user accesses support logic 162 to download drive application 156 into user input device 150. Support logic 162 may comprise HTML code well known in the art for enabling users to select features, download applications and perform typical functions performed by websites. After downloading, the user accesses drive application 156 in user input device 150 to communicate with drive unit 100. Drive application 156 may enable the user to change drive control parameters, download a logic update to update application logic, and/or retrieve performance parameters. Exemplary performance parameters include operating history of drive variables such as voltage, current, torque, speed, faults and other variables indicative of the performance of drive unit 100. Drive application 156 may also enable the user to select configuration information including a system application and a motor identifier.

A user may access drive application 156 to communicate with support logic 162 and download a logic update (to update application logic 124) into user input device 150. User input device 150 then establishes communications with drive unit 100 and downloads logic update to drive unit 100. The user can download the update to user input device 150 by accessing the Internet and then, perhaps at a different location, establishing communications with drive unit 100. Drive application 156 may provide options to the user to initiate communication with drive unit 100.

Wireless communication features include any known or future developed communication technique or protocol, including inductive (near and far field), capacitive, infrared, optical and radio-frequency technologies, and Wi-Fi, ZigBee and Bluetooth protocols. The Wi-Fi protocol is a wireless local area network protocol based on the IEEE 802.11 standard. Devices using Wi-Fi can connect to the Internet. ZigBee is based on the IEEE 802.15 standard, a protocol to create personal area networks. Bluetooth is another personal area network protocol, and is based on the IEEE 802.15.1 standard. The aforementioned wireless protocols may be used by a communication module and user input device 150 to communicate with each other. User input device 150 may also have a Wi-Fi or a cellular communications interface to connect to the Internet.

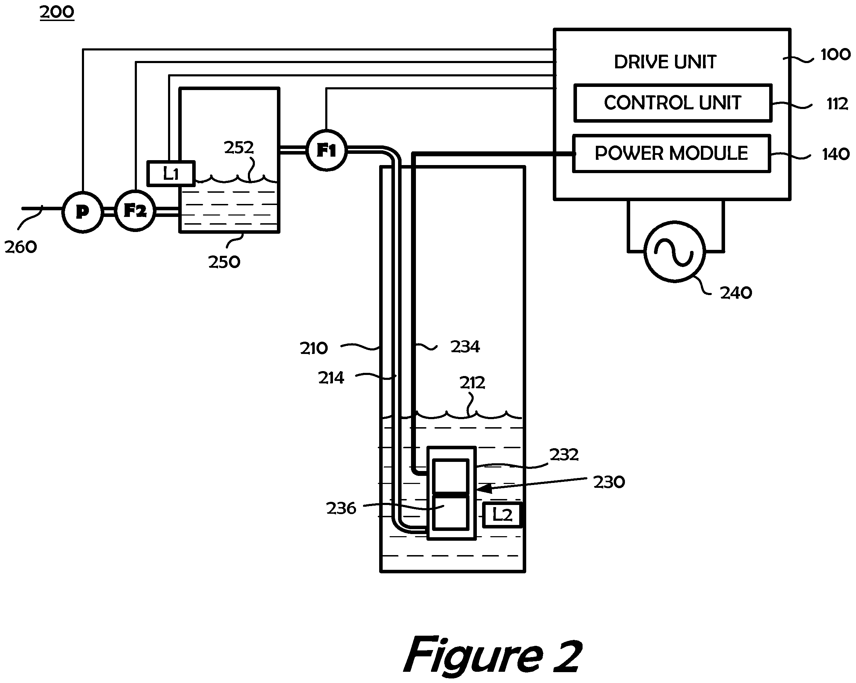

Referring to FIG. 2, a diagrammatic representation of an embodiment of a liquid supply system 200 is disclosed. Liquid supply system 200 comprises a reservoir 210 containing a liquid 212 which is pumped by a PMA 230 through a conduit 214 into a reservoir 250 holding liquid 252. Pump unit 230 includes a pump 236 driven by a motor 232 which is powered by drive unit 100 via electrical conductors 234. Drive unit 100 is supplied electrical power from a power source. An exemplary alternating current ("AC") power source 240 is shown. Other power sources include renewable energy sources such as solar panels, fuel cells and wind generators, and energy storage devices such as batteries and storage capacitors. In one example, drive unit 100 is a variable frequency drive ("VFD") and pump 236 is a conventional centrifugal pump. Motor 232 may comprise single and multi-phase induction motors. During operation of the system, liquid 212 flows through conduit 214 to reservoir 250 and out though conduit 260 for use in the fluid application. Fluid characteristics including liquid level, flow rate differential, and pressure, may be monitored with a level sensors L1 and/or L2, flow sensors F1 and F2 and a pressure sensor P to generate a demand signal representative of flow required to satisfy setpoint conditions. Exemplary setpoint conditions include fluid level, pressure and inflow/outflow rate differential. Sensor L2 may be monitored to detect potential dry run conditions and shut the drive down to prevent damage. Reservoir 210 may be an aboveground or underground tank, a well casing, or any other reservoir containing liquid 212. Reservoir 216 may be an underground or above-ground tank, or any other liquid containment device.

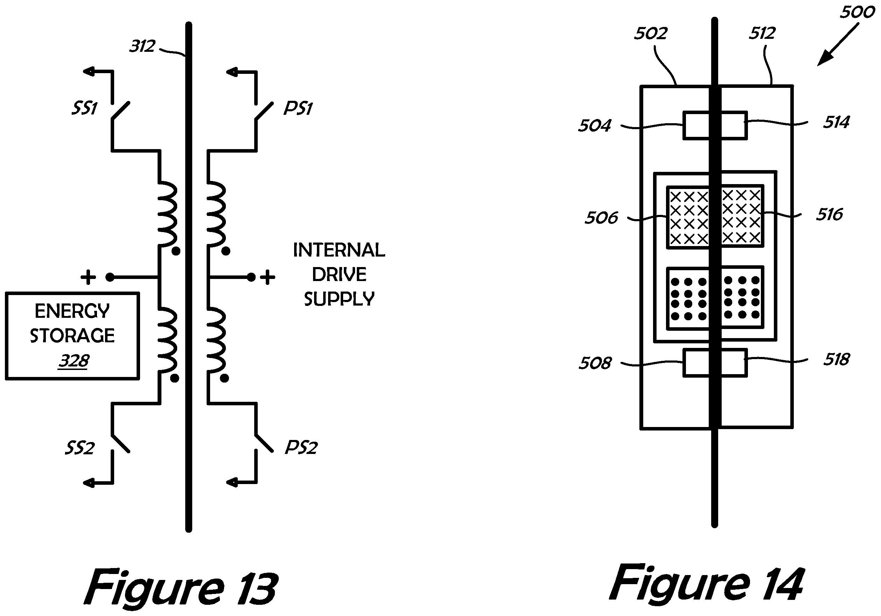

FIG. 3 illustrates another embodiment of a control system with communication features. As shown therein, a drive unit 300 includes an enclosure 302 including communication features. On a cover of enclosure 302 is display device 190. Enclosure 302 includes communication features. Exemplary communication features include an attachment feature, e.g. an attachment section, to detachably attach a communication module to the enclosure, a non-ferrous metal section to enable a magnetic flux therethrough, and an internal wireless link mounted on the control unit or an internal surface of the enclosure. Although illustrated in FIG. 3 with reference to the cover of enclosure 302, in this and the following embodiments the attachment features may also be located on a wall of the enclosure, e.g. top, bottom or side wall. The enclosure may include a non-ferrous metal section 312 and an attachment section 310. In the present embodiment, communication module 180 is detachably attached to attachment section 310 such that it overlaps non-ferrous metal section 312. In one variation of the present embodiment, communication module 180 includes a magnet, and the cover of the enclosure includes a ferrous metal. Exemplary depictions of the present embodiment are also described with reference to FIGS. 14, 15 and 17. The magnet attaches to the cover to detachably attach communication module 180 to the cover. As used herein, non-ferrous metal means a material which is substantially devoid of ferrous metal, so that it does not attract the magnet. Non-ferrous metal section 312 can encompass the entire cover. In another variation, the cover is made of aluminum or a polymeric material, and attachment section 310 comprises a mechanical attachment feature to detachably attach communication module 180. Exemplary mechanical attachment features include hook-and-loop fasteners, mechanical sliding fits, such as pockets and slots, and other known retention mechanisms. Non-ferrous metal section 312 enables magnetic coupling between communication module 180 and internal wireless link 130, which may optionally be provided.

The communication module may also function as a user interface. In one embodiment, a detector circuit is operable to detect movements of the communication module relative to the enclosure. Exemplary depictions of a detector circuit are described with reference to FIG. 6. The movements are coded as "gestures" and mapped. Gestures may include rotating and translating the communication module, and combinations of rotating and translating. In one example, the user can rotate the communication module to initiate communications. In one embodiment, the user may translate the communication module to transmit a command. In alternative embodiments, a capacitive sensor or other switches are provided on the communication module to transmit a command, which the processing device interprets and causes transmission thereof to the internal wireless link. The drive unit may display inquiries with display device 190, which the user can respond to using the communication module as described herein. In one variation, display device 190 is incorporated with the communication module.

It may be desirable to prevent unauthorized access to the control system. In one embodiment, the communication module and the internal wireless link "handshake" to confirm that an authorized communication module is being used. Handshaking may include signaling patterns by one or the other or both wireless links in a predetermined arrangement. Unless the handshake is successful, the control unit will not accept configuration changes. Handshaking also prevents misinterpretation of noise as signals. Of course, the control unit will continue to control the load when the communication module is removed.

In one embodiment, the control system is configured to temporarily mount communication module near internal wireless link 130 with cover 380 open. Such configuration is desirable to enable a technician to work on drive unit 100. A bracket, magnets or other suitable attachment features may be provided on control unit 112 to support communication module 130.

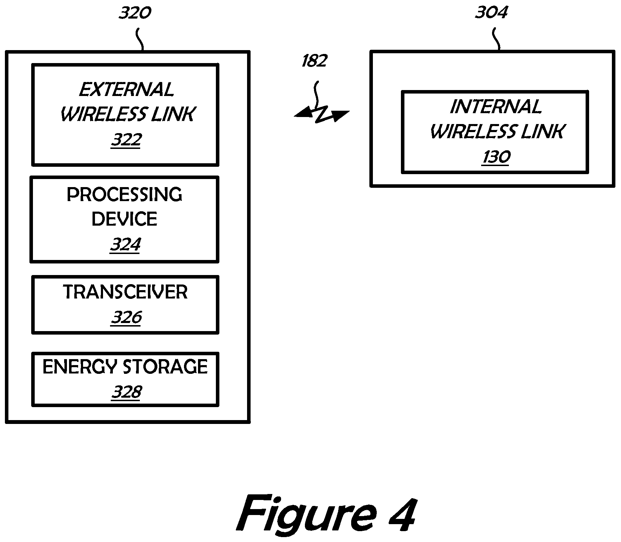

FIG. 4 illustrates a communication module denoted by numeral 320, and an internal communication module 304. Communication module 320 includes an external wireless link 322 configured to establish short-range wireless link 182 with internal wireless link 130. Exemplary short-range wireless links can be established by inductive and capacity couplings, infrared, radio-frequency and optical couplings, and personal and local area networks such as WiFi, Bluetooth and ZigBee. Communication module 320 further includes a processing device 324, a transceiver 326 and an energy storage 328. Energy storage 328 may comprise a battery, capacitor and other storage devices. Processing device 324 controls transceiver 326 and external wireless link 322. Processing device 324 may receive control parameters and other information from transceiver 326 in a first protocol and modulate the information with external wireless link 322 using a second protocol.

Energy storage 328 may be charged through the short-range wireless link. In one example, magnetic coupling is provided through non-ferrous metal section 312, as described below with reference to FIGS. 5 and 6.

FIGS. 5 and 6 are block and schematic diagrams of an embodiment of a short-range wireless link formed by an inductive coupling to establish power and communication coupling on the same coils. Referring to FIG. 5, in the present embodiment external wireless link 322 comprises a power collector 330, a detector circuit 332, a signaling circuit 334, and an edge blanking circuit 336. Internal wireless link 130 comprises a power circuit 340, a detector circuit 342, a signaling circuit 344, and an edge blanking circuit 346.

Power circuit 340 comprises a switch, illustratively a MOSFET switch, energized by a processor output in power pulses of short durations to couple a coil 348 to a high voltage DC source, illustratively 17 VDC. The power pulse durations are short relative to their periodicity. Between the power pulses, communication pulses are transmitted with coil 348 and signals from a coil 338 are detected. A snubber circuit, shown as a zener diode across coil 348, allows any leakage flux that is not coupled to coil 338 to collapse quickly, allowing a long interval without noise disturbances. A series blocking diode is provided so when the transistor is on, the snubber circuit is not conducting. Then, when the transistor turns off, the leakage flux is collapsed through the path of the zener diode and blocking diode (now conducting).

Power collector 330, illustratively a rectified DC voltage with the combination of a rectifier diode and bulk capacitor, captures energy transferred with the inductive coupling formed by coils 338 and 348, having a ratio of N:1. An exemplary ratio is 2:1.

Each of detector circuits 332 and 342 are configured to monitor the impressed voltages in coils 338 and 348 with a processor input. Resistors and a zener diode may be provided to protect the processor input. Information is synchronized with respect to the power pulses, described above, and transmitted and received in the gaps between power pulses.

Each of signaling circuits 334 and 344 are configured to convert a processor ouput to a low voltage suitable to energize corresponding coils 338 and 348. An exemplary push/pull block is shown. Exemplary push/pull blocks may comprise a half-bridge transistor circuit, an open emitter, and/or an open collector transistor. These circuits are often incorporated in microprocessors and can also be provided as discrete circuits.

Voltages applied to the coils are switched between high voltages, to induce power transfer, and low voltages, to communicate. The actual levels of the high and low voltages are determined by the component selection and the construction of the modules. To conserve energy, communications are desirable using the least power, in which case low voltages are the voltages sufficient to establish communications by generating sufficient flux to overcome the air gap. By contrast, high voltages are voltages in excess of the voltage level necessary to communicate, and where the excess power can be effectively coupled.

Edge blanking circuits 336 and 346 are configured to protect the microprocessor and are synchronized to the power pulses, at the timed interval of the power pulse. Alternative protection circuits include low pass filters, voltage dividers, zener clamps.

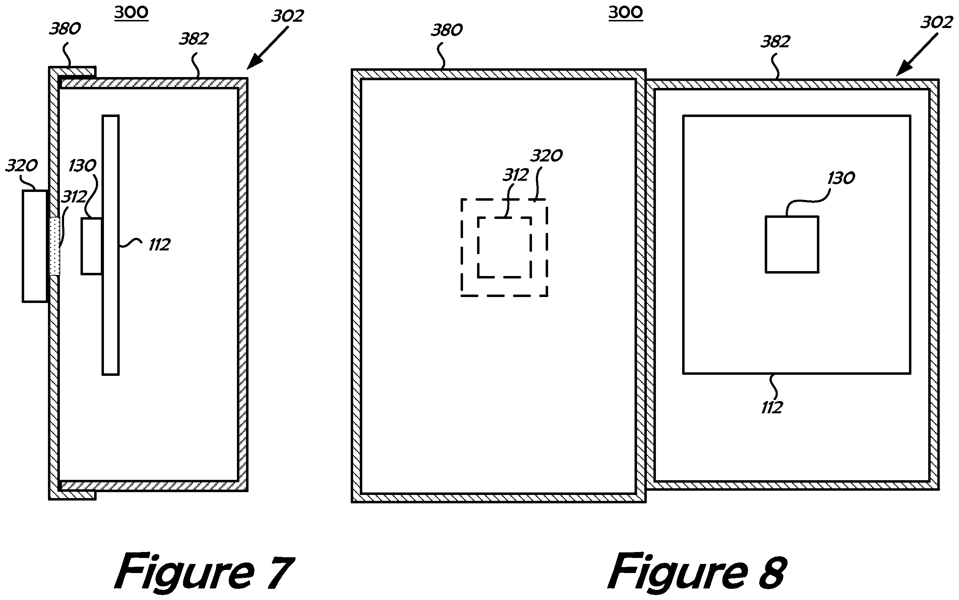

FIGS. 7 and 8 illustrate an embodiment in which internal wireless link 130 is mounted on control unit 112. FIG. 7 shows a lateral view including the enclosed space. Also shown is enclosure 302 including a cover 380 and an enclosure body 382. FIG. 8 shows a front view including cover 380 in an open position and the internal space of enclosure body 382. Mechanical attachment features are configured, and internal wireless link 130 is mounted, to create a short-range wireless link between internal wireless link 130 and communication module 320. The length and orientation of the wireless link depends on the selected short-range wireless communication technology. For near-field inductive, and capacitive communications, it is desirable to axially align the components and to minimize the air gap between them. In the present context, distance is less important for far-field inductive and network communications.

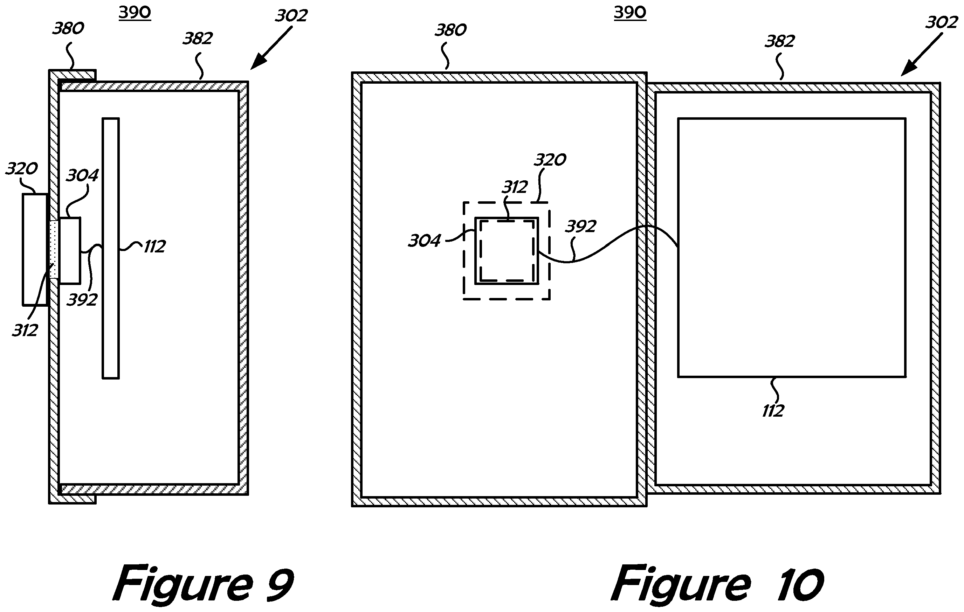

FIGS. 9 and 10 illustrate an embodiment of a drive unit 390 in which internal wireless link 130 is comprised by internal communication module 304, which is communicatively coupled to control unit 112 by a cable 392. In this manner, the air gap between internal wireless link 130 and control module 180 are minimized. When connected, cable 392 tethers cover 380 to enclosure body 382. Cable 392 may be removably coupled to eliminate tethering if cover 380 is separated from enclosure body 382.

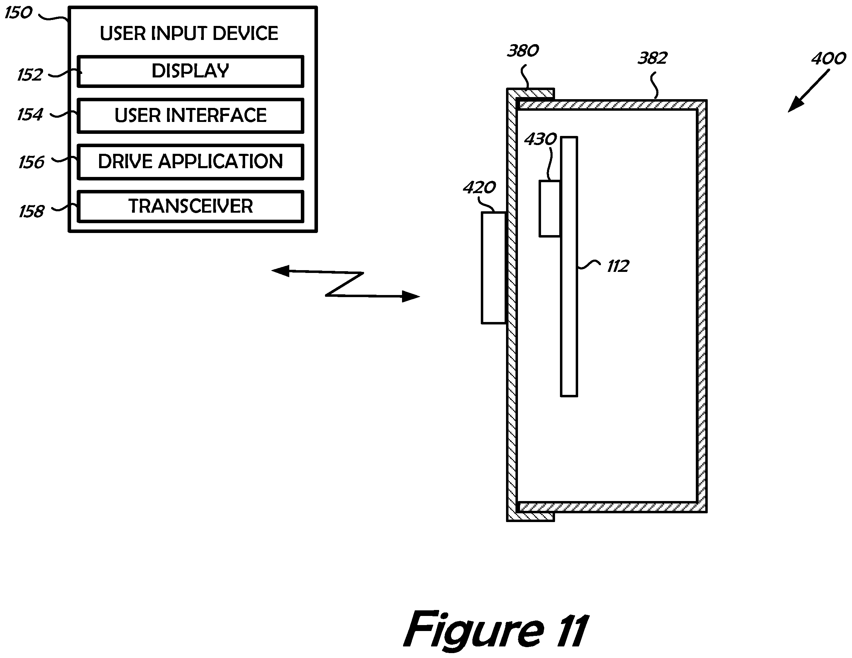

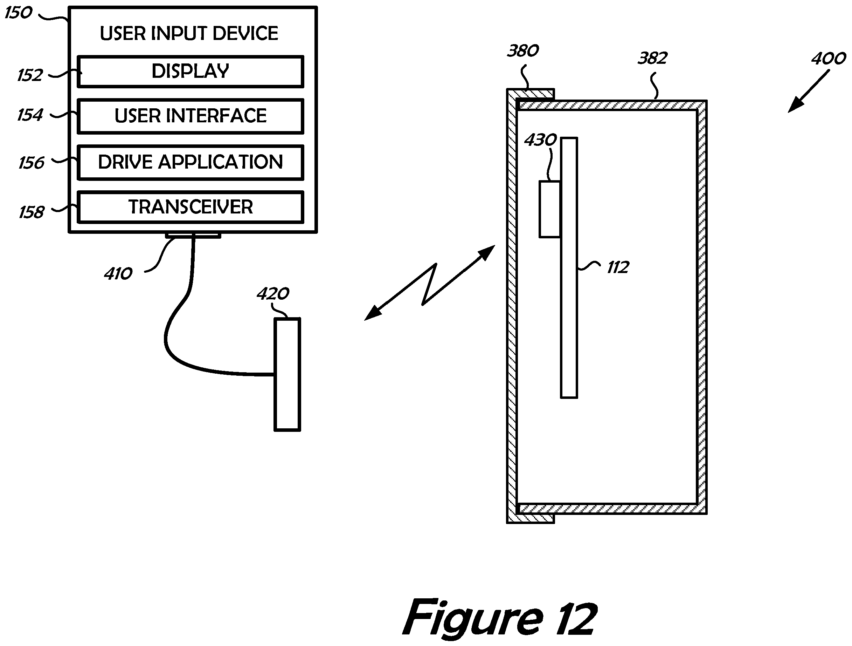

FIGS. 11 and 12 illustrate embodiments of a drive unit 400 in which internal wireless link 130 is mounted on control unit 112. In the present embodiment, the short-range wireless link comprises a network or radio-frequency technology. Suitable networks include personal and local area networks, as described above. For illustrative purposes, internal wireless link 130 is mounted on control unit 112 out of alignment with communication module 420 to show that alignment is not necessary. Internal wireless link 130 may also be aligned with communication module 420 and/or non-ferrous metal section 312. Internal wireless link 130 may also be mounted on cover 380 via internal communication module 304 as shown in FIGS. 9 and 10. FIG. 12 illustrates a variation of the present embodiment in which communication module 420 is tethered to a port 410 of user input device 150 by a cable. Communication module 420 is similar to communication module 320 except that transceiver 326 is not wireless. Variations of the embodiments shown in FIGS. 1, 3, 4 7 and 8 may also utilize a tethered communication module.

FIGS. 13 and 14 illustrate schematically and in block diagram form an embodiment of components to form an inductive short-range wireless link. As shown in FIG. 14, an internal coil 516 of an internal wireless link 512 is inductively coupled to an external coil 506 of an external wireless link 502. The coils comprise center-tapped bifiler coils. Additional circuitry, as described with reference to FIG. 6, is used to transmit power and signals through the inductive coupling. Magnets 504, 508, 514 and 518 are also shown. Internal wireless link 512 is affixed to the cover of the enclosure. In one example, the cover comprises non-ferrous material, so magnets 514 and 518 support external wireless link 502. In another example, a portion of the cover includes ferrous material and magnets 514 and 518 are not used. Magnets 504 and 508 detachably attach to the portion of the cover that includes the ferrous material. In one example, the portion of the cover that includes the ferrous material is a plate attached to a non-ferrous cover. Switches PS1, PS2, SS1 and SS2 are operable to switch the coils on/off to generate a modulated magnetic field to establish a short-range wireless link. The switches can be controlled, for example, by processing device 110 and processing device 324, or equivalents thereof in alternative embodiments and variations thereof. Additional switches (not shown) may be provided to utilize the short-range wireless link as a power coupling link in a first mode and as a communication link in a second mode, as described with reference to FIG. 6. The magnetic cores of wireless links 502, 512 can have any number of suitable configurations. Exemplary configurations include E-cores, C-cores, drum-style cores, pot cores and other suitable configurations.

In one embodiment, an internal wireless link transmits a detection signal and senses a response thereto, a "presence signal", indicative of the presence of the external wireless link. Responsive to the presence of the communication module, the internal wireless link operates in a first mode to charge the energy storage of the external wireless link. It then switches to a second mode to begin communications. In the second mode, communication signals are transmitted alone or synchronized with power pulses. In one variation, power pulses are transmitted at a first frequency in the first mode, to accelerate charging of the communication module, and at a second frequency in the second mode, to maintain the charge of the communication module, the first frequency being higher than the second frequency. In another variation, the external wireless link detects a state of charge and sends a charge indication signal to indicate to the internal wireless link that it is sufficiently charged. Responsive to the charge indication signal, the internal wireless link enters the second mode. The state of charge may be the voltage of the bulk capacitor.

The internal wireless link may transmit the detection signal periodically. For example, the detection signal may be transmitted every 500 milliseconds or every second. In a variation of the present embodiment, detection logic is provided to detect the presence of the communication module. Detection logic may comprise a capacitive switch or a reed switch on the cover that generates the presence signal. Any known detection circuits may be used. Detection logic may also detect movement of a magnet in the communication module over a given location in the cover. The internal wireless link may not begin generating power pulses or information signals until the presence is detected. The detection logic may also detect when the communication module is not present and cause the internal wireless link to cease generating signals. Of course, if the communication module is tethered or includes a battery, it may transmit a presence signal and the internal wireless link merely waits for the presence signal instead of periodically transmitting detection signals.

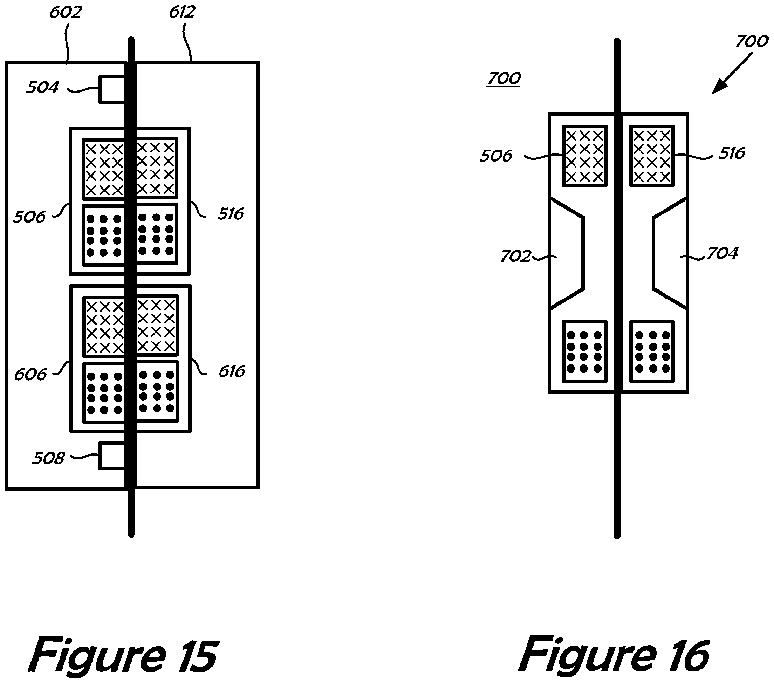

FIG. 15 illustrates another embodiment of components to form two inductive short-range wireless links. The first inductive short-range wireless link is the same as shown in FIG. 14. Internal coil 516 of an internal wireless link 612 is inductively coupled to an external coil 506 of an external wireless link 602. The second inductive short-range wireless link is formed by internal and external coils 616 and 606, respectively. Advantageously, both links can operate to simultaneously couple power and communicate.

Additional features may be provided based on the above disclosure. In one embodiment, components described above are utilized by control unit 112 to detect the presence of the cover. If the cover is removed, the product may automatically shut down or enunciate an error. The cover may be detected by detecting the level of leakage flux, where a high leakage flux indicates the lid is not present. Detector circuit 342 may be used to detect a ferrous metal cover, for example. In another example, a module comprising ferrous metal, perhaps the magnetic core of the external wireless link, may be permanently attached to the cover, without the coil, to facilitate its detection.

FIG. 16 illustrates an inductive coupling 700 comprising internal and external coils, as described previously with reference to FIG. 14. The magnetic core has a cup design to capture all fringe flux and reduce noise. The cup design comprises flux steering poles 702.

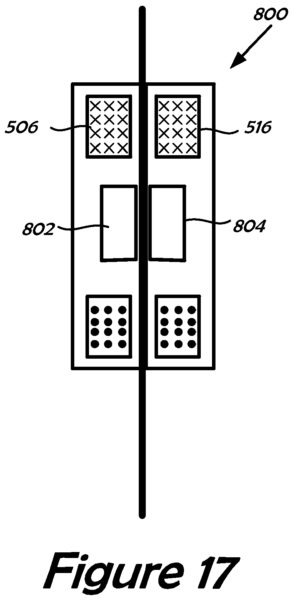

FIG. 17 illustrates an inductive coupling 800 comprising internal and external coils, as described previously with reference to FIG. 14. A magnetically attractive element 802 is provided on the communication module and a magnetically attractive element 804 is provided on the internal communication module. Elements 802 and 804 are configured to cause magnetic attraction between the internal and external modules to retain the external communication module in place. Either or both of elements 802 and 804 comprise a magnet. One of elements 802 and 804 may comprise ferrous metal that is not magnetized.

As used herein, processing instructions include a single application, a plurality of applications, one or more programs or subroutines, software, firmware, and any variations thereof suitable to execute instruction sequences with a processing device.

As used herein, a processing or computing system or device, may be a specifically constructed apparatus or may comprise general purpose computers selectively activated or reconfigured by software programs stored therein. The computing device, whether specifically constructed or general purpose, has at least one processing device, or processing device, for executing processing instructions and computer readable storage media, or memory, for storing instructions and other information. Many combinations of processing circuitry and information storing equipment are known by those of ordinary skill in these arts. A processing device may be a microprocessor, a digital signal processor ("DSP"), a central processing unit ("CPU"), or other circuit or equivalent capable of interpreting instructions or performing logical actions on information. A processing device may encompass multiple processors integrated in a motherboard and may also include one or more graphics processors and embedded memory. Exemplary processing systems include workstations, personal computers, portable computers, portable wireless devices, mobile processing devices, and any device including a processor, memory and software. Processing systems also encompass one or more computing devices and include computer networks and distributed computing devices.

As used herein, a non-transitory machine readable storage medium comprises any medium configured to store data, such as volatile and non-volatile memory, temporary and cache memory and optical or magnetic disk storage. Exemplary storage media include electronic, magnetic, optical, printed, or media, in any format, used to store information. Computer readable storage medium also comprises a plurality thereof.

Unless otherwise expressly stated in connection with a specific use thereof, the term "device" includes a single device, a plurality of devices, two components integrated into a device, and any variations thereof. The singular form is only used to illustrate a particular functionality and not to limit the disclosure to a single component. Therefore, the term "memory device" includes any variation of electronic circuits in which processing instructions executable by a processing device may be embedded unless otherwise expressly stated in connection with the specific use of the term. For example, a memory device includes read only memory, random access memory, a field programmable gate array, a hard-drive, a disk, flash memory, and any combinations thereof, whether physically or electronically coupled. Similarly, a processing device includes, for example, a central processing unit, a math processing unit, a plurality of processors on a common integrated circuit, and a plurality of processors operating in concert, whether physically or electronically coupled. Furthermore and in a similar manner, the term "application," in the context of an algorithm or software, includes a single application, a plurality of applications, one or more programs or subroutines, software, firmware, and any variations thereof suitable to execute instruction sequences with a processing device.

While this invention has been described as having an exemplary design, the present invention may be further modified within the scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A control system for a pump-motor assembly, the control system comprising:
a drive unit (100) for driving the pump-motor assembly and including:
an enclosure including a cover and an enclosure body having an opening, the enclosure comprising ferrous metal and having a non-ferrous metal section and forming an enclosed space when the cover is positioned over the opening;
a control unit (112) positioned in the enclosed space, the control unit including application logic configured to control a motor of the pump-motor assembly based on control parameters provided by a user with a user input device and a power module comprising a plurality of power switches operable to generate a driving voltage for the motor; and
an internal wireless link (130) configured to receive the control parameters, the internal wireless link positioned inside the enclosed space when the cover is positioned over the opening;
a communication module (180) located outside the enclosure and configured to establish a short-range wireless link with the internal wireless link, the communication module including a transceiver configured to establish communication with the user input device and receive the control parameters therefrom, and the communication module configured to communicate the control parameters to the internal wireless link with the short-range wireless link; and
an attachment feature detachably attaching the communication module to the enclosure with the communication module overlapping the non-ferrous metal section, providing isolated communications between the communication module and the control module to maintain the integrity of the enclosure.

2. A control system as in claim 1, wherein the communication module comprises an external wireless link and a processing device, the external wireless link establishing the short-range wireless link with the internal wireless link.

3. A control system as in claim 2, wherein the short-range wireless link comprises one of an inductive and a capacitive wireless communication link.

4. A control system as in claim 2, further comprising a power circuit configured to generate power pulses and transfer energy to the external wireless link via the power pulses.

5. A control system as in claim 4, wherein the internal wireless link comprises an internal coil, excitement of the internal coil forming the short-range wireless link, the power circuit configured to excite the internal coil to transfer power to the communication module, further comprising a signaling circuit configured to excite the internal coil to communicate data to the communication module.

6. A control system as in claim 5, wherein the power circuit is synchronized with the signaling circuit to communicate the data between power pulses.

7. A control system as in claim 4, wherein the internal wireless link comprises two internal coils, the power circuit is configured to excite one of the internal coils to transfer power to the communication module, and the signaling circuit is configured to excite the other of the two internal coils to communicate data to the communication module.

8. A control system as in claim 1, wherein the drive unit is configured to determine the presence of the communication module.

9. A control system as in claim 8, wherein the communication module is configured to transmit a presence signal, and the drive unit is configured to detect the presence signal and determine the presence of the communication module responsive to said detection, further comprising a power circuit configured to generate power pulses to transfer energy to the external wireless link via the power pulses; wherein the drive unit is configured to begin transmitting the power pulses at the first frequency responsive to the presence of the communication module.

10. A control system as in claim 9, wherein the communication module is configured to transmit a charge indication signal, and the drive unit is configured to begin transmitting data responsive to said charge indication signal.

11. A control system as in claim 10, wherein the drive unit is configured to begin transmitting the power pulses at a second frequency lower than the first frequency responsive to said charge indication signal.

12. A control system as in claim 1, further comprising an internal communication module including the internal wireless link and mounted on the enclosure spatially apart from the control unit.

13. A method comprising:
detachably attaching a communication module (180) to an enclosure comprising ferrous metal and a non-ferrous metal section so that it overlaps the non-ferrous metal section, the enclosure having therein a control unit (112) adapted to power a motor of a pump-motor assembly, the communication module including an external wireless link and a processing device;
receiving configuration parameters from a user input device with the communication module, the configuration parameters configured to control the control unit;
transmitting the configuration parameters with the external wireless link to an internal wireless link (130) located inside the enclosure through the non-ferrous metal section;
configuring the control unit based on the configuration parameters;
detaching the communication module; and
after detaching the communication module, controlling the motor with the control unit as configured with the configuration parameters.

14. A method as in claim13, further comprising detecting the presence of the communication unit, and preventing configuration of the control unit if the presence is not detected.

15. A method as in claim13, further comprising: determining that the communication module is charged above a predetermined charge level sufficient for the external wireless link to transmit the configuration parameters, and responsive to said determining, transmitting the configuration parameters to the internal wireless link.

## Patentansprüche

1. Steuersystem für eine Pumpen-Motor-Anordnung, wobei das Steuersystem Folgendes umfasst:
eine Antriebseinheit (100), die die Pumpen-Motor-Anordnung antreibt und Folgendes aufweist:
ein Gehäuse, das einen Deckel und einen Gehäusekörper aufweist, der eine Öffnung besitzt, wobei das Gehäuse eisenhaltiges Metall umfasst und einen Nicht-Eisen-Metallabschnitt aufweist und einen geschlossenen Raum bildet, wenn der Deckel über der Öffnung angeordnet ist;
eine Steuereinheit (112), die in dem geschlossenen Raum angeordnet ist, wobei die Steuereinheit Folgendes aufweist: eine Anwendungslogik, die dafür ausgelegt ist, einen Motor der Pumpen-Motor-Anordnung basierend auf Steuerparametern zu steuern, die von einem Benutzer mit einer Benutzereingabevorrichtung bereitgestellt werden, und ein Leistungsmodul, das eine Vielzahl von Stromschaltern umfasst, die betrieben werden können, um eine Antriebsspannung für den Motor zu erzeugen; und
eine interne Drahtlosverbindung (130), die dafür ausgelegt ist, die Steuerparameter zu empfangen, wobei die interne Drahtlosverbindung in dem geschlossenen Raum angeordnet ist, wenn der Deckel über der Öffnung angeordnet ist;
ein Kommunikationsmodul (180), das sich außerhalb des Gehäuses befindet und dafür ausgelegt ist, eine Nahbereichs-Drahtlosverbindung mit der internen Drahtlosverbindung herzustellen, wobei das Kommunikationsmodul einen Sendeempfänger aufweist, der dafür ausgelegt ist, eine Kommunikation mit der Benutzereingabevorrichtung herzustellen und von dieser die Steuerparameter zu empfangen, und wobei das Kommunikationsmodul dafür ausgelegt ist, die Steuerparameter mit der Nahbereichs-Drahtlosverbindung an die interne Drahtlosverbindung zu kommunizieren; und
ein Befestigungsmerkmal, das das Kommunikationsmodul lösbar an dem Gehäuse befestigt, wobei das Kommunikationsmodul den Nicht-Eisen-Metallabschnitt überlappt, wodurch isolierte Kommunikationen zwischen dem Kommunikationsmodul und dem Steuermodul bereitstellt werden, um die Integrität des Gehäuses aufrechtzuerhalten.

2. Steuersystem nach Anspruch 1, wobei das Kommunikationsmodul eine externe Drahtlosverbindung und eine Verarbeitungsvorrichtung umfasst, wobei die externe Drahtlosverbindung die Nahbereichs-Drahtlosverbindung mit der internen Drahtlosverbindung herstellt.

3. Steuersystem nach Anspruch 2, wobei die Nahbereichs-Drahtlosverbindung eine von einer induktiven und einen kapazitiven Drahtloskommunikationsverbindung umfasst.

4. Steuersystem nach Anspruch 2, ferner umfassend eine Leistungsschaltung, die dafür ausgelegt ist, Stromimpulse zu erzeugen und über die Stromimpulse Energie an die externe Drahtlosverbindung zu übertragen.

5. Steuersystem nach Anspruch 4, wobei die interne Drahtlosverbindung eine interne Spule umfasst, wobei eine Erregung der internen Spule die Nahbereichs-Drahtlosverbindung bildet, wobei die Leistungsschaltung dafür ausgelegt ist, die interne Spule zu erregen, um Strom zu dem Kommunikationsmodul zu übertragen, ferner umfassend eine Signalschaltung, die dafür ausgelegt ist, die interne Spule zu erregen, um Daten an das Kommunikationsmodul zu kommunizieren.

6. Steuersystem nach Anspruch 5, wobei die Leistungsschaltung mit der Signalschaltung synchronisiert ist, um die Daten zwischen Stromimpulsen zu kommunizieren.

7. Steuersystem nach Anspruch 4, wobei die interne Drahtlosverbindung zwei interne Spulen umfasst, wobei die Leistungsschaltung dafür ausgelegt ist, eine der internen Spulen zu erregen, um Strom zu dem Kommunikationsmodul zu übertragen, und wobei die Signalschaltung dafür ausgelegt ist, die andere der zwei internen Spulen zu erregen, um Daten an das Kommunikationsmodul zu kommunizieren.

8. Steuersystem nach Anspruch 1, wobei die Antriebseinheit dafür ausgelegt ist, die Anwesenheit des Kommunikationsmoduls festzustellen.

9. Steuersystem nach Anspruch 8, wobei das Kommunikationsmodul dafür ausgelegt ist, ein Anwesenheitssignal zu senden, und wobei die Antriebseinheit dafür ausgelegt ist, das Anwesenheitssignal zu detektieren und in Reaktion auf die Detektion die Anwesenheit des Kommunikationsmoduls festzustellen, ferner umfassend eine Leistungsschaltung, die dafür ausgelegt ist, Stromimpulse zu erzeugen, um über die Stromimpulse Energie an die externe Drahtlosverbindung zu übertragen, wobei die Antriebseinheit dafür ausgelegt ist, in Reaktion auf die Anwesenheit des Kommunikationsmoduls mit dem Übertragen der Stromimpulse mit einer ersten Frequenz zu beginnen.

10. Steuersystem nach Anspruch 9, wobei das Kommunikationsmodul dafür ausgelegt ist, ein Ladungsanzeigesignal zu senden, und wobei die Antriebseinheit dafür ausgelegt ist, in Reaktion auf das Ladungsanzeigesignal mit dem Senden von Daten zu beginnen.

11. Steuersystem nach Anspruch 10, wobei die Antriebseinheit dafür ausgelegt ist, in Reaktion auf das Ladungsanzeigesignal mit dem Übertragen der Stromimpulse mit einer zweiten Frequenz zu beginnen, die niedriger ist als die erste Frequenz.

12. Steuersystem nach Anspruch 1, ferner umfassend ein internes Kommunikationsmodul, das die interne Drahtlosverbindung aufweist und räumlich beabstandet von der Steuereinheit an dem Gehäuse befestigt ist.

13. Verfahren, umfassend:
lösbares Befestigen eines Kommunikationsmoduls (180) an einem Gehäuse, das eisenhaltiges Metall und einen Nicht-Eisen-Metallabschnitt umfasst, so dass es den Nicht-Eisen-Metallabschnitt überlappt, wobei das Gehäuse eine Steuereinheit (112) in seinem Inneren aufweist, die dafür geeignet ist, einen Motor einer Pumpen-Motor-Einheit mit Strom zu versorgen, wobei das Kommunikationsmodul eine externe Drahtlosverbindung und eine Verarbeitungsvorrichtung aufweist;
Empfangen von Konfigurationsparametern von einer Benutzereingabevorrichtung mit dem Kommunikationsmodul, wobei die Konfigurationsparameter dafür ausgelegt sind, die Steuereinheit zu steuern; Senden der Konfigurationsparameter mit der externen Drahtlosverbindung an eine sich im Inneren des Gehäuses befindende interne Drahtlosverbindung (130) durch den Nicht-Eisen-Metallabschnitt;
Konfigurieren der Steuereinheit basierend auf den Konfigurationsparametern; Entfernen des Kommunikationsmoduls; und
nach dem Entfernen des Kommunikationsmoduls Steuern des Motors mit der Steuereinheit, so wie sie mit den Konfigurationsparametern konfiguriert wurde.

14. Verfahren nach Anspruch 13, ferner umfassend das Detektieren der Anwesenheit der Kommunikationseinheit und das Verhindern der Konfiguration der Steuereinheit, wenn die Anwesenheit nicht detektiert wird.

15. Verfahren nach Anspruch 13, ferner umfassend: Feststellen, dass das Kommunikationsmodul über einen vorbestimmten Ladungspegel hinaus geladen ist, der ausreichend ist, damit die externe Drahtlosverbindung die Konfigurationsparameter sendet, und in Reaktion auf die Feststellung erfolgendes Senden der Konfigurationsparameter an die interne Drahtlosverbindung.

## Revendications

1. Système de commande pour un bloc de motopompe, lequel système de commande comprend :
une unité d'entraînement (100) pour entraîner le bloc de motopompe, comprenant :
un coffre avec un couvercle et un corps de coffre muni d'une ouverture, lequel coffre se compose de métal ferreux et possède une partie en métal non ferreux et forme un espace clos quand le couvercle est placé par-dessus l'ouverture ;
une unité de commande (112) placée dans l'espace clos, laquelle unité de commande comprend une logique d'application configurée pour commander un moteur du bloc de motopompe sur la base de paramètres de commande fournis par un utilisateur à l'aide d'un dispositif de saisie par l'utilisateur et un module d'alimentation comprenant plusieurs interrupteurs d'alimentation pouvant être actionnés afin de générer une tension d'entraînement pour le moteur ; et
une liaison sans fil interne (130) configurée pour recevoir les paramètres de commande, la liaison sans fil interne étant placée à l'intérieur de l'espace clos quand le couvercle est placé par-dessus l'ouverture ;
un module de communication (180) situé en dehors du coffre et configuré pour établir une liaison sans fil à courte portée avec la liaison sans fil interne, le module de communication comprenant un émetteur-récepteur configuré pour établir la communication avec le dispositif de saisie par l'utilisateur et pour recevoir de celui-ci les paramètres de commande, et le module de communication étant configuré pour communiquer les paramètres de commande à la liaison sans fil interne avec la liaison sans fil à courte portée ; et
une fixation qui fixe de façon amovible le module de communication au coffre avec le module de communication chevauchant la partie en métal non ferreux, créant des communications isolées entre le module de communication et le module de commande afin de préserver l'intégrité du coffre.

2. Système de commande selon la revendication 1, dans lequel le module de communication comprend une liaison sans fil externe et un dispositif de traitement, la liaison sans fil externe établissant la liaison sans fil à courte portée avec la liaison sans fil interne.

3. Système de commande selon la revendication 2, dans lequel la liaison sans fil à courte portée comprend une liaison de communication sans fil inductive ou capacitive.

4. Système de commande selon la revendication 2, comprenant en outre un circuit d'alimentation configuré pour générer des impulsions d'alimentation et transférer de l'énergie vers la liaison sans fil externe à l'aide d'impulsions d'alimentation.

5. Système de commande selon la revendication 4, dans lequel la liaison sans fil interne comprend une bobine interne dont l'excitation crée la liaison sans fil à courte portée et le circuit d'alimentation est configuré pour exciter la bobine interne afin de transférer de l'énergie vers le module de communication, comprenant en outre un circuit de signalisation configuré pour exciter la bobine interne afin de communiquer des données au module de communication.

6. Système de commande selon la revendication 5, dans lequel le circuit d'alimentation est synchronisé avec le circuit de signalisation afin de communiquer des données entre les impulsions d'alimentation.

7. Système de commande selon la revendication 4, dans lequel la liaison sans fil interne comprend deux bobines internes, le circuit d'alimentation est configuré pour exciter l'une des bobines internes afin de transférer de l'énergie au module de communication, et le circuit de signalisation est configuré pour exciter l'autre bobine interne afin de communiquer des données au module de communication.

8. Système de commande selon la revendication 1, dans lequel l'unité d'entraînement est configurée de façon à déterminer la présence du module de communication.

9. Système de commande selon la revendication 8, dans lequel le module de communication est configuré pour émettre un signal de présence et l'unité d'entraînement est configurée pour détecter le signal de présence et déterminer la présence du module de communication en réponse à ladite détection, comprenant en outre un circuit d'alimentation configuré pour générer des impulsions d'alimentation afin de transmettre de l'énergie à la liaison sans fil externe à l'aide des impulsions d'alimentation, l'unité d'entraînement étant configurée de façon à commencer à émettre les impulsions d'alimentation à la première fréquence en réponse à la présence du module de communication.

10. Système de commande selon la revendication 9, dans lequel le module de communication est configuré de façon à émettre un signal d'indication de charge et l'unité d'entraînement est configurée de façon à commencer à émettre des données en réponse audit signal d'indication de charge.

11. Système de commande selon la revendication 10, dans lequel l'unité d'entraînement est configurée de façon à commencer à émettre les impulsions d'alimentation à une deuxième fréquence plus basse que la première fréquence en réponse audit signal d'indication de charge.

12. Système de commande selon la revendication 1, comprenant en outre un module de communication interne incluant la liaison sans fil interne et monté sur le coffre séparément de l'unité de commande dans l'espace.

13. Procédé comprenant :
la fixation amovible d'un module de communication (180) sur un coffre composé de métal ferreux et d'une partie en métal non ferreux de telle façon qu'il chevauche la partie en métal non ferreux, le coffre contenant une unité de commande (112) adaptée pour actionner un moteur d'un bloc de motopompe,
le module de communication comprenant une liaison sans fil externe et un dispositif de traitement,
la réception de paramètres de configuration d'un dispositif de saisie par l'utilisateur avec le module de communication, lesquels paramètres de configuration sont configurés de façon à commander l'unité de commande ;
l'émission des paramètres de configuration avec la liaison sans fil externe vers une liaison sans fil interne (130) située à l'intérieur du coffre à travers la partie en métal non ferreux ;
la configuration de l'unité de commande sur la base des paramètres de configuration ;
le détachement du module de communication et,
après le détachement du module de communication, la commande du moteur avec l'unité de commande configurée avec les paramètres de configuration.

14. Procédé selon la revendication 13, comprenant en outre la détection de la présence de l'unité de communication et le blocage de la configuration de l'unité de commande si la présence n'est pas détectée.

15. Procédé selon la revendication 13, comprenant en outre la détermination du fait que le module de communication est chargé au-dessus d'un niveau de charge prédéterminé suffisant pour que la liaison sans fil externe transmette les paramètres de configuration et, en réponse à ladite détermination, que les paramètres de configuration soient émis vers la liaison sans fil interne.
